## Europäisches Patentamt

## European Patent Office

## Office européen des brevets

(19)

(11) Veröffentlichungsnummer: **0 138 188**
**B1**

(12) # EUROPÄISCHE PATENTSCHRIFT

(45) Veröffentlichungstag der Patentschrift:
**16.12.87**

(51) Int. Cl.⁴: **B 01 D  29/04,** B 01 D  29/38

(21) Anmeldenummer: **84112132.0**

(22) Anmeldetag: **10.10.84**

(54) Filternutsche.

(30) Priorität: **18.10.83  CH 5663/83**

(43) Veröffentlichungstag der Anmeldung:
**24.04.85 Patentblatt 85/17**

(45) Bekanntmachung des Hinweises auf die Patenterteilung:
**16.12.87 Patentblatt 87/51**

(84) Benannte Vertragsstaaten:
**AT BE DE FR GB IT NL SE**

(56) Entgegenhaltungen:
**CH-A-600 928**
**GB-A-792 613**
**GB-A-2 084 890**
**US-A-4 081 381**

(73) Patentinhaber: **Rosenmund AG, Gestadeckplatz 6, CH- 4410 Liestal (CH)**

(72) Erfinder: **Grieder, Max, Im Wegacker 1, CH- 4492 Tecknau (CH)**
Erfinder: **Evans, Albert D., 228, Newton Road Lowton/nr Warrington, Greater Manchester WA3 2AF (GB)**
Erfinder: **Weibel, Hans, Brunnhaldenweg 3, CH- 4410 Liestal (CH)**

(74) Vertreter: **EGLI- EUROPEAN PATENT ATTORNEYS, Horneggstrasse 4, CH- 8008 Zürich (CH)**

## Beschreibung

Die Erfindung betrifft eine Filternutsche gemäss dem Oberbegriff des Patentanspruchs 1.

Druckfilter dieser Art werden auch Filternutschen genannt. Sie dienen der Trennung von mittel bis gut filtrierbaren Suspensionen. Eine solche Filternutsche ist beispielsweise aus der CH-A-441 230 bekannt. Danach ist ein Gehäuse mit mindestens einem darin angeornneten Filtermittelträger vorgesehen. Mit Hilfe einer separaten Fördereinrichtung wird der sich auf dem Filter ansammelnde Filterkuchen in ein konzentrisch zur vertikalen Gehäuseachse angeordnetes Austragrohr gefördert. Dabei ist das Austragrohr mit der Fördereinrichtung derart verbunden, dass es an allen Vertikalbewegungen der Fördereinrichtung zwangsläufig teilnimmt. Nur für Reinigungs- oder Revisionsvorgänge lässt sich das Austragrohr von der Fördereinrichtung trennen. Bei Verwendung derartiger Filter als Drucknutschen ist das untere Ende des Austragrohres während des Nutschvorganges dicht verschlossen, so dass keine Filtermasse herauslaufen kann. Beim anfänglichen Einfüllen der Filtermasse in den Druckfilter kann jedoch durch versehentliches Überfüllen der Einrichtung Filtermasse in die obere freie Öffnung des Austragrohres einlaufen und damit zu Betriebsstörungen führen. Ferner wirkt sich das relativ grosse Volumen des Austragrohres beim Nutschvorgang nachteilig aus, da sich die darin enthaltene Luft komprimiert und damit zu schwer kontrollierbaren Druckverhältnissen führt. Dieser Effekt macht sich deshalb störend bemerkbar, weil das Luftvolumen des Austragrohres grössenordnungsmässig demjenigen der restlichen Filterkammer entspricht.

Bei einer weiteren bekannten Filtervorrichtung gemäss DE-A-31 36 773 ist das untere Ende des Austragrohres durch ein Ventil abgeschlossen, welches jedoch an dieser Stelle besondes stark der Vetschmutzung ausgesetzt ist und wegen dort abgelagerten Filterkuchenresten häufig zu Betriebsstörungen führt. Bei dieser bekannten Filtervorrichtung sind ferner an einem drehbaren Arm Schälmesser vorgesehen, welche den verfestigten Filterkuchen nach aussen bzw. pfeilartig nach beiden Seiten abschälen, wodurch dieser je nach Ausrichtung der rotietenden Messer entweder nach aussen oder nach beiden Seiten der Messer geworfen wird. Die aufgeworfene Filtermasse muss daraufhin in einem gesonderten Arbeitsgang, nämlich unter Umkehrung der Drehrichtung des Armes, mit Hilfe von Transportschaufeln, welche ebenfalls am Arm befestigt sind, aber funktionell von den Schälmessern getrennt sind, zur zentralen Ausföreröffnung am Filter transportiert werden.

Ausser solchen Filternutschen mit zentraler Austragung des Filterkuchens sind auch Filternutschen handelsüblich, die eine seitliche Austragung des Filterkuchens vorsehen, insbesondere unter Verwendung von Förderschnecken. Obwohl sich die bekannten Filternutschen in der Praxis grundsätzlich bewährt haben, sind sie nach heutigen Gesichtspunkten hinsichtlich des konstruktiven Aufwandes verbesserungsfähig, insbesondere auch zur Erleichterung der Bedienung und der Wartung der Anlage. Als besonders aufwendig und störanfällig haben sich unter anderem die Förderschnecken erwiesen. Es ist Aufgabe der vorliegenden Erfindung, bekannte Filternutschen mit zentraler Austragung dahingehend zu verbessern, dass die Gleichmässigkeit des Arbeitsergebnisses, die Betriebssicherheit und die Wartungsfreundlichkeit bei mindestens gleichbleibender Zuverlässigkeit der Anlage erhöht werden. Diese Aufgabe wird erfindungsgemäss durch die im Patentanspruch 1 definierten Merkmale gelöst.

Durch diese Massnahme wird eine einfache und sichere zentrale Ausförderung erreicht, die für viele praktische Anwendungsfälle besonders zweckmässig ist. Durch das nach oben verfahrbare Austragrohr sowie durch die Möglichkeit, es bereits einlaufseitig abzuschliessen, ist die Gefahr des Ueberlaufens beim Einfüllen mit Sicherheit ausgeschlossen. Ferner lassen sich die Druckverhältnisse bei Drucknutschen wegen des verkleinerten Luftvolumens besser beherrschen. Durch die Zusammenfassung der bisher voneinander getrennten Schäl- und Fördermittel für den Filterkuchen ergibt sich eine überraschend vorteilhafte Kombination, welche nicht nur den Wirkungsgrad der Anlage erhöht, sonden auch ihre Bedienung und die Wartung erheblich vereinfacht. Zusätzlich ergibt sich als wesentlicher Vorteil dieser Lösung die Möglichkeit, die Filtermasse vor der eigentlichen Filtration mit Hilfe der Schaufeln zu verdichten sowie nach der Filtration den verdichteten Filterkuchen auf einfache Weise und praktisch vollständig vom Filterboden zu lösen. Der Verdichtungsvorgang lässt sich durch Einstellen des Axialdruckes auf den Schaufelarm einstellen, so dass der Verdichtungsgrad vor Beginn der Filtration sehr feinfühlig eingestellt werden kann. Ausserdem lässt sich mit Hilfe der Schaufeln der Filterkuchen bei Bedarf in einem Lösungsmittel oder Spülmittel erneut aufschlämmen, worauf sich ein weiterer Filtrationsvorgang anschliessen kann. Die Wartung der Einrichtung beschränkt sich auf die üblichen Reinigungsgänge, wobei sich die Schaufeln wesentlich einfacher und schneller reinigen lassen als Schnecken- oder Bandförderer. Auch die Störanfälligkeit gegenüber eingeklemmtem Filtergut, wie sie an Lagern von Schnecken- oder Bandförderanlagen auftritt, ist bei der vorliegenden Einrichtung wesentlich reduziert.

Im folgenden werden Ausführungsbeispiele der Erfindung anhand von Zeichnungen näher erläutert. Es zeigen:.

Fig. 1 in schematischer Schnittdarstellung eine Druckpresse gemäss der Erfindung, mit eingefülltem Filtergut,

Fig. 2 die Presse gemäss Fig. 1 in Austragstellung,
Fig. 3 den Schnitt III-III gemäss Fig. 2,
Fig. 4 die Aufsicht auf die Schaufeln, und
Fig. 5 das Blockschaltbild einer Steuerschaltung.

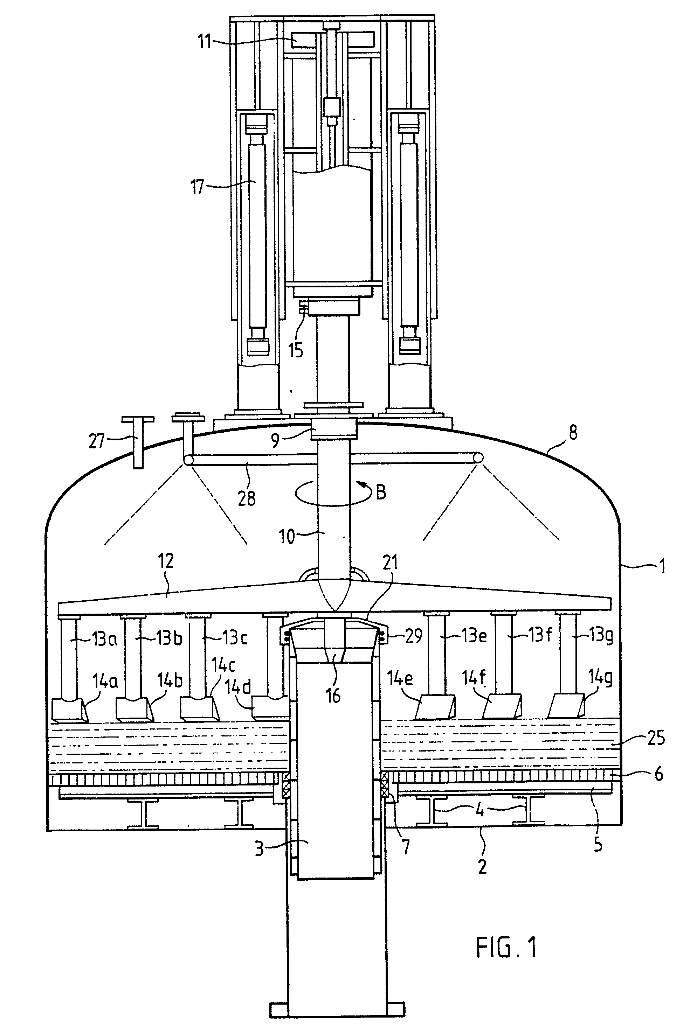

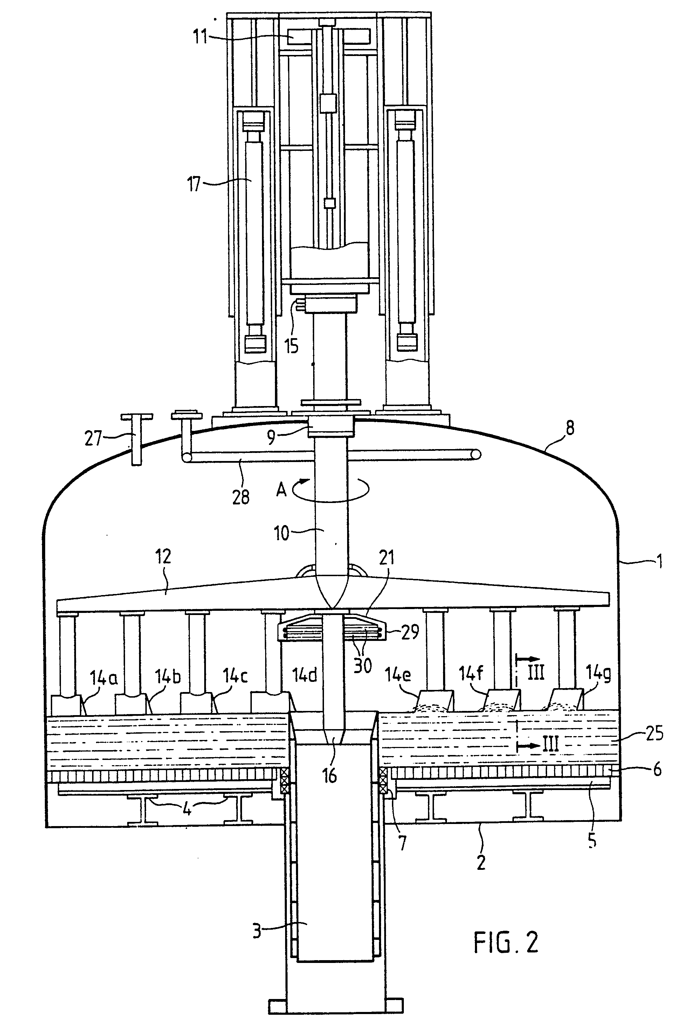

Die Filterpresse gemäss den Figuren 1 und 2 weist ein zylindrisches Gehäuse 1 mit einem kreisförmigen Gehäuseboden 2 auf. In seiner Mitte ist der Gehäuseboden 2 mit einer Öffnung versehen, durch welche ein vertikal verschiebbares Austragrohr 3 von unten in das Gehäuseinnere ragt.

Auf dem Gehäuseboden 2 stützt sich ein Tragrost 4 mit einem Filtermittelträger 5 ab. Auf dem Filtermittelträger 5 schliesslich befindet sich ein Filter 6. Zwischen dem Tragrost 4 bzw. dem Filtermittelträger 5 einerseits und dem Austragrohr 3 andererseits sind Dichtungen 7 vorgesehen, welche beispielsweise als Stopfbüchsen ausgebildet sein können. Unter dem Filtermittelträger 5 befindet sich ein in der Figur nicht dargestellter Ablauf für die sich dort ansammelnde Flüssigkeit.

Den oberen Abschluss des Gehäuses 1 bildet ein Deckelteil 8 mit einem zentral angeordneten abgedichteten Lager 9. Durch das Lager 9 ist eine Hohlwelle 10 axial verschiebbar und drehbar geführt. Die Hohlwelle 10 steht mit entsprechenden Antriebsmitteln 11, beispielsweise mit Elektromotoren oder hydraulischen Verstellelementen in Verbindung.

An ihrem unteren Ende geht die Hohlwelle 10 in einen Rohrarm 12 über, welcher bezüglich des Gehäuses 1 bzw. des Gehäusebodens 2 radial angeordnet ist. Am Rohrarm 12 sind vertikal verlaufende rohrförmige Schaufelhalter 13 a-g angebracht, welche an ihrem unteren Ende in Schaufeln 14 a-g übergehen. Die Hohlwelle 10 ist in ihrem oberen Teil mit Fluidanschlüssen 15 versehen, durch welche ein Heizmittel, beispielsweise Heissluft, Heisswasser oder ein anderes geeignetes Fluid, dem Rohrarm 12, den Schaufelhaltern 13 a-g sowie den Schaufeln 14 a-g zugeleitet wird. Das Heizmittel fliesst dabei innerhalb diese Systems in einem geschlossenen Kreislauf. An den Anschlüssen 15 wird sowohl heisses Fluid zugeführt als auch abgekühltes Fluid, welches den erwähnten Kreislauf durchlaufen hat, abgeführt.

Innerhalb der Hohlwelle 10 verläuft etwa koaxial eine Schubstange 16, welche an ihrem oberen Ende mit zweiten Antriebsmitteln 17 zur Erzeugung einer Hubbewegung verbunden ist und welche mit ihrem unteren Ende mit dem Austragsrohr 3 in Verbindung steht. Angetrieben von den zweiten Antriebsmitteln 17 lässt sich das obere Ende des Austragsrohrs mit Hilfe der Schubstange 16 in die gewünschte vertikale Position bringen, wie dies später im einzelnen beschrieben wird. Dabei ist sichergestellt, dass das Austragrohr 3 Dreh- oder Hubbewegungen des mit der Hohlwelle 10 verbundenen Rohrarms 12 sowie der Schaufeln 14 a-g nicht mitmacht. Über nicht dargestellte Steuermittel zwischen den ersten und den zweiten Antriebsmitteln 11 bzw. 17 ist jedoch sichergestellt, dass die Hubbewegung der Hohlwelle 10 sowie den mit ihr verbundenen Teilen und dem Austragrohr 3 aufeinander abgestimmt, beispielsweise synchron erfolgen.

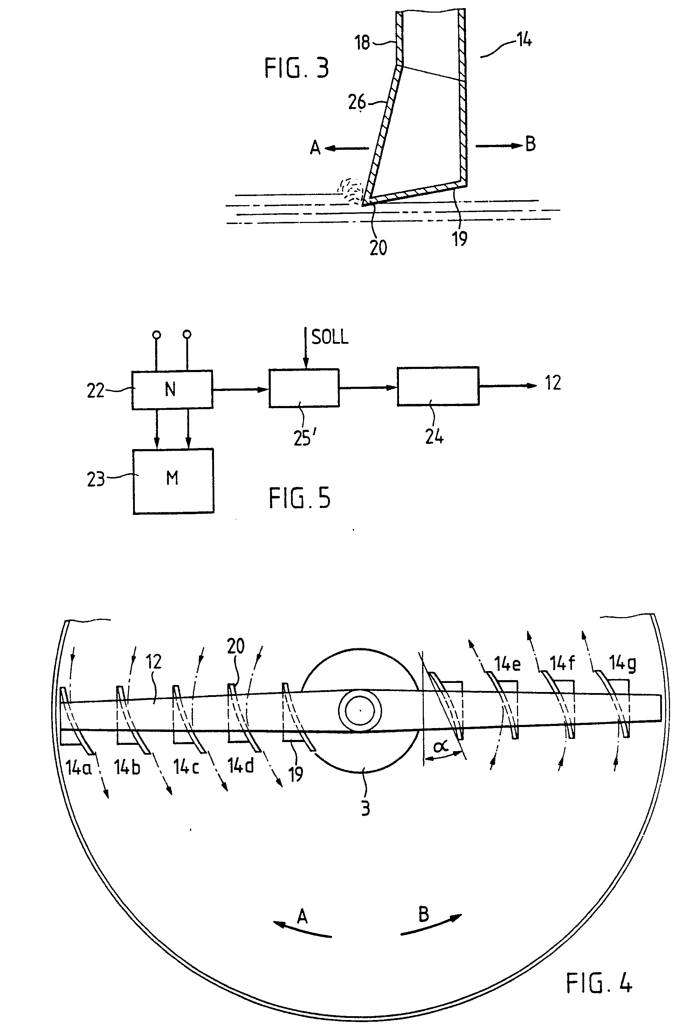

Einzelheiten der Schaufeln 14 a-g werden in folgenden anhand der Figur 3 erläutert. An einem nach unten in einer Bewegungsrichtung A ausladenden Kasten 18 ist ein Boden 19 vorgesehen, welcher gegenüber der Horizontalen um einen spitzen Winkel von wenigen Grad, beispielsweise um 5 bis 10 Grad, in der Bewegungsrichtung A abgesenkt ist. Dadurch bildet sich einerseits eine Schneidkante 20, welche in Bewegungsrichtung A wirkt, und andererseits eine durch den Boden 19 gebildete Verstreich- bzw. Andruckfläche, wenn die Schaufel in der entgegengesetzten Richtung B bewegt wird.

Figur 4 zeigt die Aufsicht auf die Schaufeln 14 a-g gemäss den Figuren 1 und 2. Die Schaufeln 14a bis 14d auf einer Armhälfte sind in gewissem radialen Abstand voneinander angeordnet, während die Schaufeln 14e bis 14g auf der diametral gegenüberliegenden Armhälfte in entsprechendem radialen Abstand voneinander, aber jeweils in den Lücken der ersten Armhälfte angeordnet sind. Bei Drehung des Rohrarms 12 ergibt sich somit eine vollständige Überdeckung der Bodenfläche durch die Schneiden 20 der Schaufeln 14a bis 14g.

Wie sich aus Fig. 4 weiter ergibt, sind die Schneiden 20 der Schaufeln 14 a-g in der Ebene des Filterbodens bzw. des Filterkuchens leicht gekrümmt ausgebildet, um einen einwandfreien Transport des abgetragenen Materials zum Zentrum des Gehäuses zu gewährleisten, wenn der Arm 12 in Richtung A bewegt wird. Das abgetragene Material wird dabei jeweils von einer Schaufel an die nächstfolgende innere Schaufel weitergegeben, bis es von der innersten Schaufel in die Öffnung des Austragrohrs 3 gefördert wird.

Gemäss Fig. 3 sind die Schaufeln 14 ausgehend von der Schneide 20 nach oben leicht verjüngt ausgebildet. Dadurch entsteht eine Förderschar 26, durch welche das abgeschälte Material in die gewünschte Richtung gelenkt wird. Unterstützt wird diese Funktion durch die Ausbildung und Ausrichtung der Schneiden 20 bzw. der Förderscharen gemäss Fig. 4. Danach sind die Schneiden 20 und mit ihnen die Förderscharen 26 gemäss Fig. 3 in einem Radius gekrümmt, der etwa dem Radius des Armes 12 entspricht. Gegenüber dem Arm 12 sind die Schneiden 20 um einen Winkel alpha von im Beispiel 60 bis 70 Grad schräg gestellt. Diese Massnahme gewährleistet die gewünschte Funktion des Schälens und gleichzeitig des Förderns von geschältem Material zur Mitte des Filters.

Überraschenderweise genügt aber die oben erläuterte Ausbildung der Schaufeln vollständig zum einwandfreien Schälen und Fördern des Filterkuchenmaterials zur Mitte der Filtereinrichtung und in die Öffnung des Austragrohres 3. Es sind also weder getrennte Schäl- und Fördermittel vorgesehen, noch sind getrennte Arbeitsgänge dazu erforderlich. Vielmehr wird der Filterkuchen durch ein und dieselbe Vorrichtung geschält und gefördert, und dies in ein und demselben Arbeitsgang.

Das zu behandelnde Material wird durch eine Einfüllöffnung 27 im Deckel 8 eingefüllt. Dabei ist gemäss Fig.1 das Austragrohr 3 vollständig nach oben gezogen. In dieser Position ist die obere Öffnung des Austragrohres 3 durch einen am Arm 12 angebrachten Deckel 21 sowie durch Dichtungen 30 fest verschlossen, so dass auch bei versehentlichem Überfüllen der Anlage kein Material in das Austragrohr fliessen kann. Der Deckel 21 wirkt also als Absperrvorrichtung, welche den Innenraum des Filters nach aussen dicht abschliesst. Anstelle des Deckels kann auch ein Schieber oder eine andere gegen Verschmutzung unempfindliche Absperrvorrichtung vorgesehen sein. Mit Hilfe der zuvor erwähnten Schubstange 16 lässt sich das Austragrohr 3 relativ zum Arm 12 axial verschieben, um auf diese einfache Weise die Öffnung des Austragrohres zu verschliessen bzw. für das spätere Austragen des Filterkuchens wieder zu öffnen.

Anschliessend wird das eingefüllte Material durch Drehen des Armes 12 in Richtung des Pfeils B durch die Bodenflächen 19 der Schaufeln 14 verdichtet, indem die Hohlwelle 10 durch die ersten Antriebsmittel 11 kontinuierlich abgesenkt wird. Die Absenkung kann auch schrittweise erfolgen. Schliesslich ist der Verdichtungsgrad des Filtermaterials mit Hilfe der im folgenden beschriebenen Massnahme sehr genau einstellbar.

Dazu wird auf besonders vorteilhafte Weise mit Hilfe eines in Fig. 5 als Blockschaltbild dargestellten Regelkreises über einen Leistungsmesser 22 am Antriebsmotor 23 für die Hohlwelle 10 ein Stellglied 24 beeinflusst, welches damit lastabhängig die vertikale Verstellung des Armes 12 vornimmt. In einem Vergleicher 25', der zwischen dem Leistungsmesser 22 und dem Stellglied 24 liegt, wird der vom Leistungsmesser erfasste Wert mit einem einstellbaren SOLL-Wert verglichen. Entsprechend dem Vergleichsergebnis wird das Stellglied 24 zur vertikalen Bewegung des Armes 12 beeinflusst.

Der anschliessende Filtrationsvorgang erfolgt auf an sich bekannte Weise durch Erzeugen von Überdruck im oberen Teil des Gehäuses 1 oder durch Erzeugen von Unterdruck unterhalb des Filtermittelträgers 5. Es können auch beide Verfahren kombiniert angewendet werden. Während dieses Verfahrensschrittes bleibt das Austragrohr in der oberen, geschlossenen Position gemäss Fig. 1, wobei der Deckel 21 den Innenraum des Filters bereits am Einlass des Austragrohres abdichtet, so dass das relativ grosse Luftvolumen innerhalb des Austragrohres 3 beim Druckaufbau nicht mehr störend in Erscheinung treten kann.

Nach Beendigung des Filtrationsvorganges wird der auf dem Filter 6 liegende verdichtete Filterkuchen auf die im folgenden beschriebene Weise ausgetragen. Wie in Fig. 2 gezeigt, wird zunächst das Austragrohr 3 mit Hilfe der Schubstange 16 vom Arm 12 und dem mit ihm verbundenen Deckel 21 entfernt und auf das obere Niveau des Filterkuchens 25 abgesenkt, so dass das abgetragene Material in die obere Öffnung des Austragrohrs gefördert werden kann. Der Arm 12 wird sodann in Richtung A in Rotation versetzt. Durch gesteuertes Absenken des Arms 12 auf den Filterkuchen 25 schälen die Schaufeln 14 Schicht für Schicht des Filterkuchens ab und transportieren die geschälte Masse zum Zentrum in die Öffnung des Austragrohrs 3. Während dieses Vorgangs wird das Austragrohr 3 kontinuierlich zusammen mit dem Arm 12 abgesenkt.

Alternativ kann vor diesem Arbeitsgang der Filterkuchen bei geschlossenem Austragrohr 3 unter Zugabe von Waschflüssigkeit aus einem Sprührohr 28 aufgeschlämmt werden. Der Arm 12 vollführt dabei die gleichen Bewegungen wie für den Abtragvorgang beschrieben.

Die aufgeschlämmte Masse kann ferner bei geschlossenem Austragrohr 3 einem Trocknungsprozess unterzogen werden. Dazu wird der Arm wieder wie zuvor beschrieben in Richtung A bewegt. Zusätzlich wird über die Fluidanschlüsse 15 ein Heizmittel zugeführt, welches in dem Arm 12 sowie in den daran angeschlossenen Teilen zirkuliert. Dadurch erfolgt eine besonders wirkungsvolle Beheizung des Innenraums bzw. des zu trocknenden Filterguts, da die der Beheizung dienende Oberfläche gegenüber bekannten Filtern dieser Art wesentlich vergrössert ist.

**Patentansprüche**

1. Filternutsche mit einem Gehäuse (1) und innerhalb des Gehäuses angeordnetem Filter (6) mit Filtermittelträger (5) sowie mit einer Fördereinrichtung, welche an einem um eine vertikale Achse drehbaren und axial verschiebbaren Arm (12) angeordnet ist, wobei die Fördereinrichtung den sich auf dem Filter ansammelnden Filterkuchen (25) in ein zentrisch nach unten verlaufendes Austragrohr (3) fördert, dadurch gekennzeichnet, dass das Austragrohr (3) während des Betriebs gegenüber dem Arm (12) axial verschiebbar ausgebildet ist und dass das obere Ende des Austragrohres (3) mit einem Absperrteil (21) verschliessbar ist.

2. Filternutsche nach Anspruch 1, dadurch gekennzeichnet, dass das Absperrteil (21) als Deckel ausgebildet und am Arm (12) befestigt ist.

3. Filternutsche nach Anspruch 2, dadurch gekennzeichnet, dass der Deckel einen das Austragrohr (3) übergreifenden und mit Dichtungen (30) versehenen Rand (29) aufweist.

4. Filternutsche nach Anspruch 1, wobei die Fördereinrichtung aus Schaufeln besteht, dadurch gekennzeichnet, dass die Schaufeln (14a-14g) mindestens eine Schälkante (20) aufweisen, welche mit der zugehörigen Schaufel bei Drehung des Armes (12) eine in Richtung des Zentrums wirkende Förderschar (26) bildet, wobei die Förderscharen die einzigen Fördermittel darstellen und wobei sowohl das Schälen des Filterkuchens durch die Schälkante (20) als auch die Förderung des abgeschälten Materials in Richtung zum Zentrum durch Drehen des Armes (12) in ein und derselben Drehrichtung (A) erfolgt.

5. Filternutsche nach Anspruch 4, dadurch gekennzeichnet, dass die Schaufeln (14a-14g) mit einer innerhalb der Ebene des Filterkuchens (25) gekrümmten Schälkante (20) versehen sind.

6. Filternutsche nach Anspruch 4, dadurch gekennzeichnet, dass die Unterseiten der Schaufeln mit Andruckflächen (19) versehen sind, welche auf die Oberfläche des Filterkuchens (25) bei Drehung des Armes (12) in einer der ersten Drehrichtung (A) entgegengesetzten Drehrichtung (B) wirken.

7. Filternutsche nach Anspruch 4, dadurch gekennzeichnet, dass der Arm (12) als Rohrarm und die Schaufeln (14a-14g) hohl ausgebildet sind und der Rohrarm (12) an einer Hohlwelle (10) befestigt ist, derart dass die Hohlwelle (10), der Rohrarm (12) und die Schaufeln (14a-14g) ein gemeinsames Leitungssystem für ein fluides Heizmittel bilden.

8. Filternutsche nach Anspruch 7, dadurch gekennzeichnet, dass das Austragrohr (3) über eine innerhalb der Hohlwelle (10) geführte Schubstange (16) axial verstellbar ist.

9. Filternutsche nach Anspruch 5, dadurch gekennzeichnet, dass die Schälkanten (20) der Schaufeln (14a-14g) in einem Radius gekrümmt sind, welcher grössenordnungsmässig dem Radius des Armes (12) entspricht.

10. Filternutsche nach Anspruch 4, dadurch gekennzeichnet, dass die Schälkante (20) gegenüber der Hauptachse des Armes (12) um einen Winkel zwischen 60 und 70 Grad schräg gestellt ist.

11. Filternutsche nach Anspruch 7, dadurch gekennzeichnet, dass die Schaufeln (14a-14g) über rohrförmige Schaufelhalter (13a-13g) mit dem Rohrarm (12) in Verbindung stehen.

12. Filternutsche nach Anspruch 7, mit Antriebsmitteln (11) für die Drehbewegung der Hohlwelle (10), dadurch gekennzeichnet, dass an die Antriebsmittel (11) ein Leistungsmesser (22) angeschlossen ist, welcher über einen Sollwertvergleicher (25') an ein Stellglied für die axiale Verstellung der Hohlwelle sowie der mit ihr verbundenen Teile (12, 13, 14) angeschlossen ist.

## Claims

1. Nutsch filter with a casing (1) and within said casing a filter (6) with a filter medium carrier (5), as well as a conveying means, which is positioned on an axially displaceable arm (12) rotatable about a vertical axis, the conveying means conveying the filter cake (25) collecting on the filter into a centrally downwardly directed discharge pipe (3), characterised in that during operation, discharge pipe (3) is constructed so as to be axially displaceable with respect to arm (12) and that the upper end of discharge pipe (3) can be closed with a shutoff member (21).

2. Nutsch filter according to claim 1, characterised in that the shutoff member (21) is constructed as a cover and is fixed to arm (12).

3. Nutsch filter according to claim 2, characterised in that the cover has a rim (29) provided with seals (30) and engaging over the discharge pipe (3).

4. Nutsch filter according to claim 1, the conveying means comprising blades, characterised in that the blades (14a-14g) have at least one paring edge (20), which, together with the associated blade, forms on rotating arm (12) a conveyor group (26) acting in the direction of the centre, the conveyor groups constituting the individual conveying means and in which both the paring of the filter cake by paring edge (20) and the conveying of the pared material in the direction of the centre takes place by rotating arm (12) in the same rotation direction (A).

5. Nutsch filter according to claim 4, characterised in that the blades (14a-14g) are provided with a paring edge (20) curved within the plane of filter cake (25).

6. Nutsch filter according to claim 4, characterised in that the underside of the blades are provided with pressure surfaces (19), which act on the surface of filter cake (25) when rotating arm (12) in a rotation direction (B) opposite to the first rotation direction (A).

7. Nutsch filter according to claim 4, characterised in that arm (12) is constructed as a tubular arm and blades (14a-14g) are hollow and that the tubular arm (12) is fixed to a hollow shaft (10) in such a way that hollow shaft (10), tubular arm (12) and blades (14a-14g) form a jointline system for a fluid heating medium.

8. Nutsch filter according to claim 7, characterised in that discharge pipe (3) is axially adjustable by means of a thrust rod (16) guided within hollow shaft (10).

9. Nutsch filter according to claim 5, characterised in that the paring edges (20) of blades (14a-14g) are curved in a radius, which is of the same order of magnitude as the radius of arm (12).

10. Nutsch filter according to claim 4, characterised in that the paring edge (20) is inclined with respect to the main axis of arm (12) by an angle between 60 and 70°.

11. Nutsch filter according to claim 7, characterised in that the blades (14a-14g) are connected to tubular arm (12) by means of tubular blade holders (13a-13g).

12. Nutsch filter according to claim 7, with drive means (11) for the rotary movement of hollow shaft (10), characterised in that a power measuring device (22) is connected to drive means (11) and which is connected by means of a desired value comparator (25') to a control member for the axial adjustment of the hollow shaft, as well as the parts (12,13,14) connected thereto.

## Revendications

1. Filtre sous pression comportant un corps (1) et un filtre (6) disposé à l'intérieur de ce corps, avec un support (5) du moyen de filtrage ainsi qu'un dispositif de transport, qui est disposé sur un bras (12) susceptible de pivoter sur un axe vertical et de coulisser axialement, le dispositif de transport poussant le tourteau de filtration (25), qui se forme sur le filtre, dans un tube d'extraction (3) s'étendant au centre vers le bas, caractérisé par le fait que le tube d'extraction (3) est conformé de façon à pouvoir être déplacé par rapport au bras (12) par coulissement en cours de fonctionnement et que l'extrémité supérieure du tube d'extraction (3) peut être fermée grâce à une pièce de fermeture (21).

2. Filtre sous pression selon la revendication 1, caractérisé par le fait que la pièce de fermeture (21) est en forme de couvercle et est fixée au bras (12).

3. Filtre sous pression selon la revendication 2, caractérisé par le fait que le couvercle présente un bord (2a) muni de joints qui recouvre le tube d'extraction (3).

4. Filtre sous pression selon la revendication 1, dans lequel le dispositif de transport est constitué par des palettes caractérisé par le fait que ces palettes (14a à 14g) présentent au moins un bord râcleur (20) qui forme avec la palette correspondante, lors de la rotation du bras (12), une lame de transport agissant en direction du centre, ces lames de transport représentent les seuls moyens de transport, le râclage du tourteau de filtration par le bord râcleur (20) ainsi que le transport de la matière râclée en direction du centre, intervenant grâce à la rotation du bras (12) dans un seul et même sens (A) de rotation.

5. Filtre sous pression selon la revendication 4, caractérisé par le fait que les palettes (14a à 14g) sont munies d'un bord râcleur (20) présentant une courbure qui s'étend à l'intérieur du plan du tourteau de filtration (25).

6. Filtre sous pression selon la revendication 4, caractérisé par le fait que les palettes sont munies, à leur partie inférieure, de surfaces d'appui (19) qui agissent sur la surface extérieure du tourteau de filtration (25) dans un sens de rotation (B) opposé au premier sens de rotation (A).

7. Filtre sous pression selon la revendication (4), caractérisé par le fait que le bras (12) est tubulaire et que les palettes (14a à 14g) sont creuses et que le bras (12) tubulaire est fixé à un arbre creux (10), de telle sorte que le bras creux (10), le bras tubulaire (12) et les palettes (14a à 14g) forment un système de conduit commun pour un fluide de chauffage.

8. Filtre sous pression selon la revendication 7, caractérisé en ce que le tube d'extraction (3) est réglable axialement sur une tige de colissement (16) passant à i'intérieur de l'arbre creux (10).

9. Filtre sous pression selon la revendication 5, caractérisé par le fait que les bords râcleurs (20) des palettes (14a à 14g) ont un rayon de courbure qui est d'un ordre de grandeur correspondant à celui du bras (12).

10. Filtre sous pression selon la revendication 4, caractérisé par le fait que le bord râcleur (20) est placé obliquement par rapport à l'axe principal du bras (12), avec un angle compris entre 60 et 70 degrés.

11. Filtre sous pression selon la revendication 7, caractérisé par le fait que les palettes (14a à 14g) sont reliées au bras tubulaire (12) par l'intermédiaire d'un support tubulaire de palettes.

12. Filtre sous pression selon la revendication 7, comportant des moyens d'entraînement (11) pour le mouvement rotatif de l'arbre creux (10), caractérisé par le fait qu'un wattmètre (22) est associé aux moyens d'entraînement, lequel est raccordé à un organe de réglage par l'intermédiaire d'un dispositif de comparaison avec une valeur prescrite (25') en vue du réglage axial de l'arbre creux ainsi que des pièces (12, 13, 14) qui sont reliées à ce dernier.

FIG . 1

FIG. 2

FIG. 3

FIG. 5

FIG. 4